(19) Europäisches Patentamt
European Patent Office
Office européen des brevets

(11) **EP 3 308 903 A1**

(12) **EUROPEAN PATENT APPLICATION**

(43) Date of publication:
**18.04.2018 Bulletin 2018/16**

(51) Int Cl.:
**B23Q 1/01** *(2006.01)* **B23Q 1/62** *(2006.01)*
**B23Q 5/38** *(2006.01)*

(21) Application number: **17194311.1**

(22) Date of filing: **02.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.10.2016 IT 201600101422**

(71) Applicant: **FIDIA S.p.A.**
**10099 San Mauro Torinese (Torino) (IT)**

(72) Inventors:
• **REPOSSINI, Ugo Protaso**
**20153 MILANO (IT)**
• **MORFINO, Giuseppe**
**10025 PINO TORINESE (Torino) (IT)**

(74) Representative: **Vanzini, Christian et al**
**Jacobacci & Partners S.p.A.**
**Corso Emilia 8**
**10152 Torino (IT)**

(54) **A MACHINE TOOL**

(57) The machine tool (MT) comprises
a fixed bearing structure (10),
a movable bearing structure (20) supported by the fixed bearing structure (10) and displaceable with respect thereto along a horizontal direction,
a tool-carrying carriage (20) mounted vertically translatable in the movable bearing structure (16) between an upper end position and a lower end position, situated at respective heights or levels ($h_M$, $h_m$) separated by a predetermined vertical distance ($h_M - h_m$), and

motor means (22, 23) adapted to cause a horizontal displacement of the movable bearing structure (16) with respect to the fixed bearing structure (10) and/or a vertical displacement of the tool-carrying carriage (20) with respect to the movable bearing structure (16).

The fixed bearing structure (10) is configured such that the movable bearing structure (16) is supported and driven in its displacement at a height or level (hs) intermediate between the heights or levels ($h_M$, $h_m$) of the end positions of the tool-carrying carriage (20).

FIG. 1

EP 3 308 903 A1

**Description**

The present invention relates in general to the machine tool sector, and in particular to machine tools for machining by chip removal.

More specifically, the invention relates to a machine tool of the type comprising:

a fixed bearing structure,
a movable bearing structure supported by the fixed bearing structure and displaceable with respect thereto along a horizontal direction,
a tool-carrying carriage mounted vertically translatable in the movable bearing structure between an upper end position and a lower end position, situated at respective heights or levels separated by a predetermined vertical distance, and
motor means adapted to cause a horizontal displacement of the movable bearing structure with respect to the fixed bearing structure and/or a vertical displacement of the tool-carrying carriage with respect to the movable bearing structure.

Machine tools are known of the type wherein the movable bearing structure comprises at least one vertical upright connected at its lower end with sliding guides and kinematic drive chains to an operatively fixed bearing structure which is translatable horizontally and wherein the carriage or the tool-carrying head is vertically translatable along such upright.

In such a machine, the aforementioned upright must have a high structural rigidity in all possible positions of the tool-carrying carriage, especially when the latter is in or near its upper end position.

In this respect, it has been found that when the positioning height or level of the tool-carrying carriage is increased, the flexural rigidity of the aforementioned upright is reduced substantially in proportion to the cube of such height or level. In other words, given that z is the positioning height or level of the tool-carrying carriage relative to the base of the upright, the rigidity of such upright is proportional to $(1/z^3)$.

Therefore, when the tool-carrying carriage operates in or near its upper end operating position, the flexural rigidity of the upright is considerably reduced.

An object of the present invention is to provide a machine tool which allows the aforementioned drawback of machines according to the prior art to be overcome.

This and other objects are accomplished according to the present invention with a machine tool of the initially defined type, characterized in that the fixed bearing structure is configured in such a way as to support the movable bearing structure and to allow displacement, via the associated motor means, at an intermediate height or level between the heights or levels of said tool-carrying carriage end positions.

Appropriately, said intermediate height or level corresponds substantially to the arithmetic average of the heights or levels of said end positions of the tool-carrying carriage.

Further features and advantages of the present invention will become apparent from the detailed description that follows, provided by way of non-limiting example with reference to the accompanying drawings, wherein:

figure 1 shows, in an essentially front-side perspective view, a machine tool according to the present invention;
figure 2 is an enlarged scale view of the part of the machine tool indicated at II in figure 1;
figure 3 shows the machine tool according to the previous figures, essentially in a rearside perspective view;
figure 4 is an enlarged scale view of the portion indicated at IV in figure 3;
figure 5 is a front elevation view of the machine tool according to the previous figures;
figure 6 is a side elevation view of the machine tool according to the previous figures;
figure 7 is a sectioned view along the line VII-VII of figure 5; and
figure 8 is a partial perspective view of a variant of embodiment of the machine tool according to the invention.

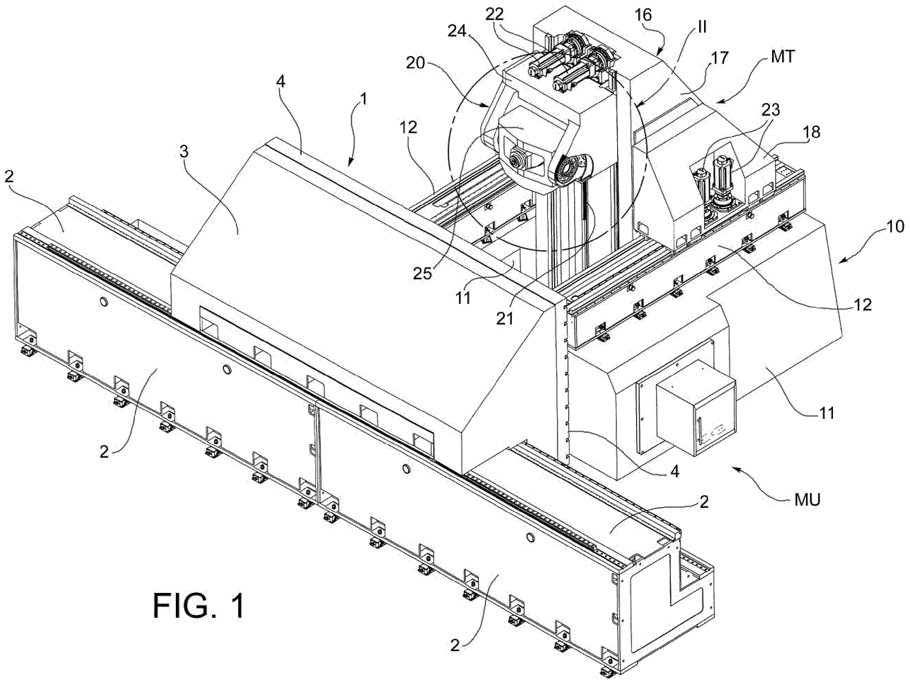

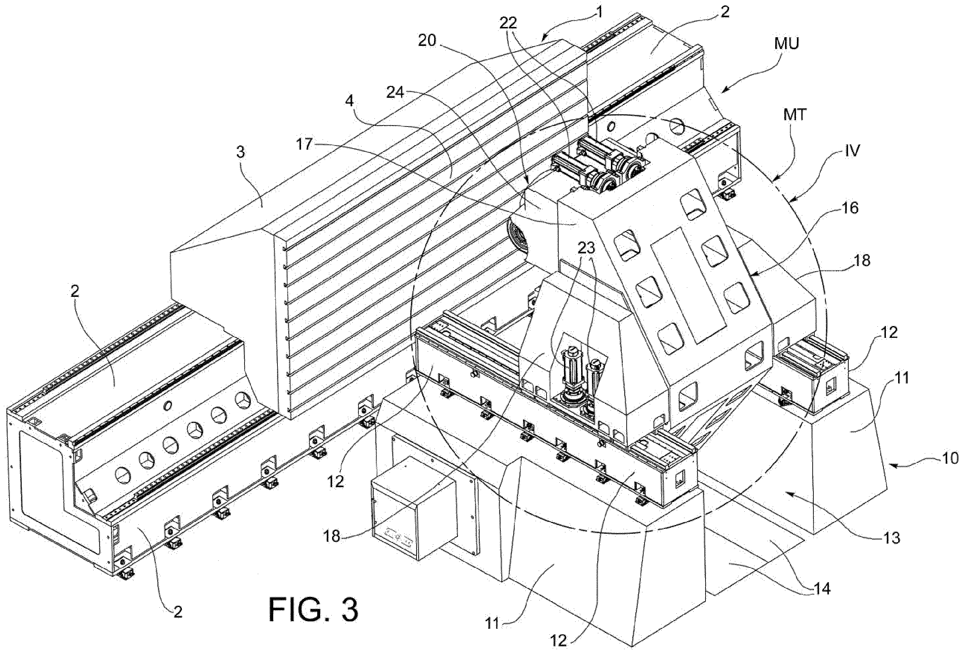

In figures 1 and 3, a machining unit including a workpiece-carrying structure 1 of a type known per se and a machine tool MT according to the present invention is indicated collectively at MU.

The workpiece-carrying structure 1 in the embodiment illustrated by way of example comprises a horizontal base 2, whereon a structure 3 is mounted including a vertical workpiece-carrying table 4, facing the machine tool MT.

The machine tool MT comprises an operatively fixed bearing structure indicated collectively at 10. In the embodiment illustrated by way of example, this bearing structure 10 comprises two base bearing members 11, horizontal and parallel to each other, on the top of which respective guides 12 are fixed, which are horizontal and parallel to each other.

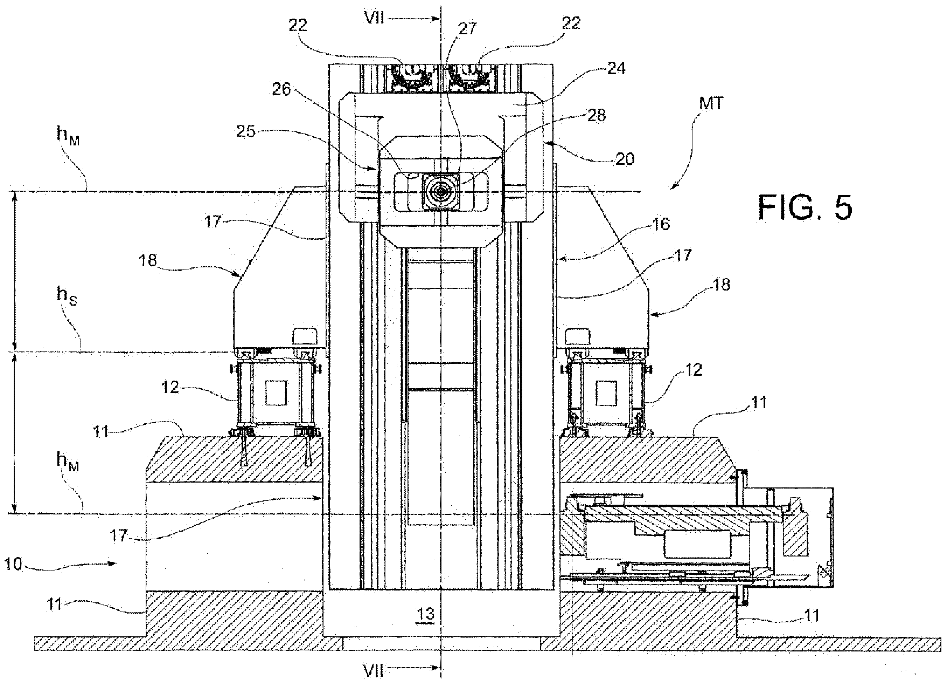

As can best be seen in figures 3 and 5, a passage 13 is defined between the base bearing members 11. At the base of such passage 13 a groove 14 may be suitably formed, as is particularly apparent in figure 3.

The machine tool MT further comprises a movable bearing structure, collectively indicated at 16 in the drawings.

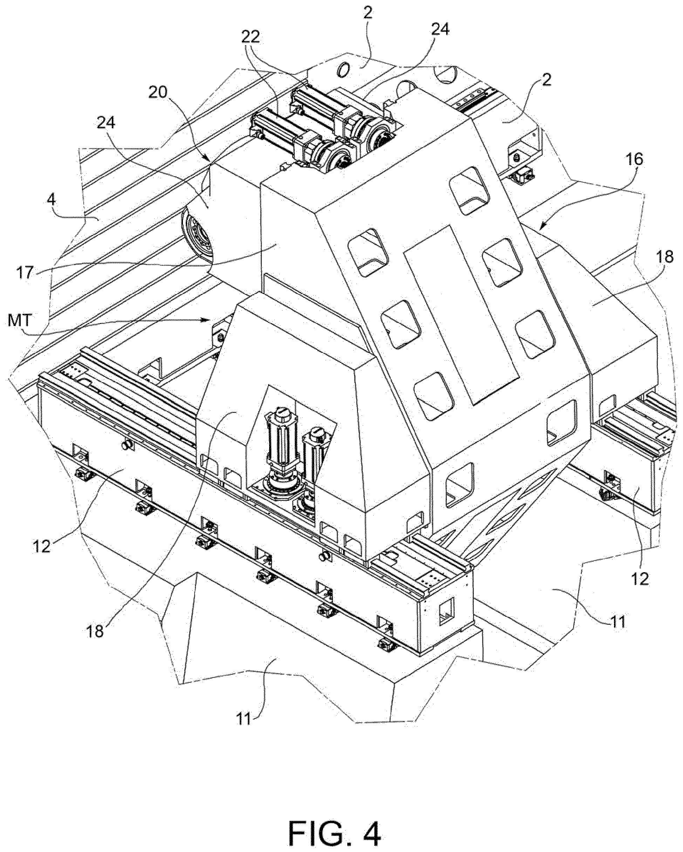

In the illustrated embodiment, the movable bearing structure 16 essentially comprises an upright 17 which, at the sides thereof opposite to the base bearing members 11, has respective motorized carriages 18 adapted to interact with the guides 12 to determine a horizontal displacement of the movable bearing structure 16 relative to the fixed bearing structure 10 (see in particular figures 3 to 5).

On the front side of the upright 17, which faces the workpiece-carrying structure 1, a tool-carrying carriage is mounted vertically translatable, indicated collectively at 20.

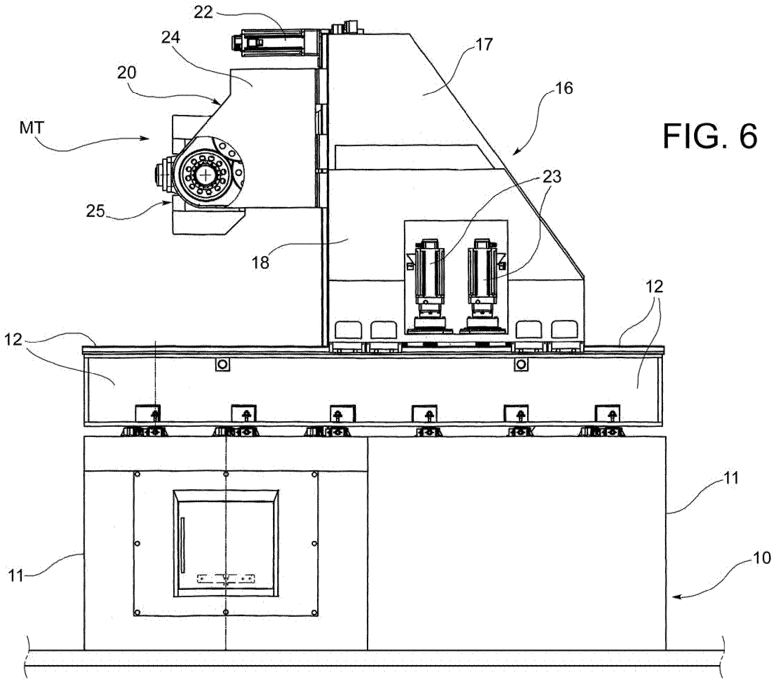

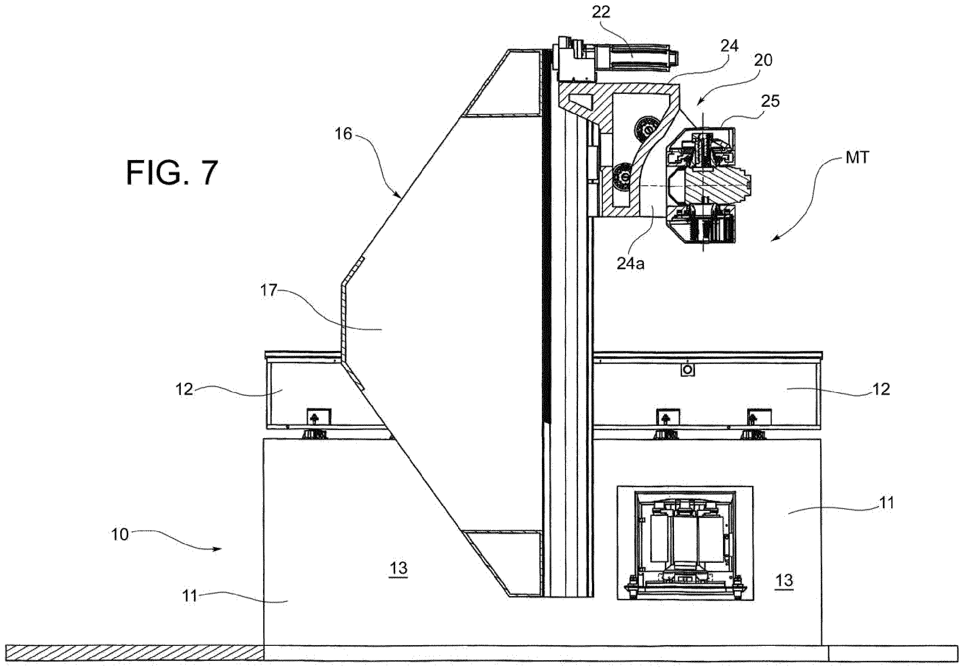

The tool-carrying carriage 20, which will be described further below, is vertically movable between an upper end position shown in figures 1-7, wherein it extends near the upper end of the upright 17, and a lower end position, wherein it extends near the lower end of said upright 17.

In figure 5, the height or level of the tool-carrying carriage 20 corresponding to the aforementioned upper end position is indicated at $h_M$, while the height or level of the carriage corresponding to the lower end position is indicated at $h_m$.

According to the present invention, the fixed bearing structure 10, 11 of the machine tool MT is configured such that the movable bearing structure (16) is supported and driven in its displacement at a height or level hs intermediate between the heights $h_M$ and $h_m$ of the end positions of the tool-carrying carriage 20.

Preferably, the height or level hs is substantially equal to the arithmetic average of heights or levels $h_M$, $h_m$, namely:

$$h_S = (h_M + h_m)/2.$$

Due to such features, with respect to a machine according to the prior art wherein the movable bearing structure is supported by the fixed structure at the height or level $h_m$ and where the travel of the tool-carrying carriage is substantially equal to $h_M$ - $h_m$, the flexural rigidity of the upright of the mobile structure of the machine according to the invention is significantly increased, even by approximately eight times when said carriage is in the upper end position.

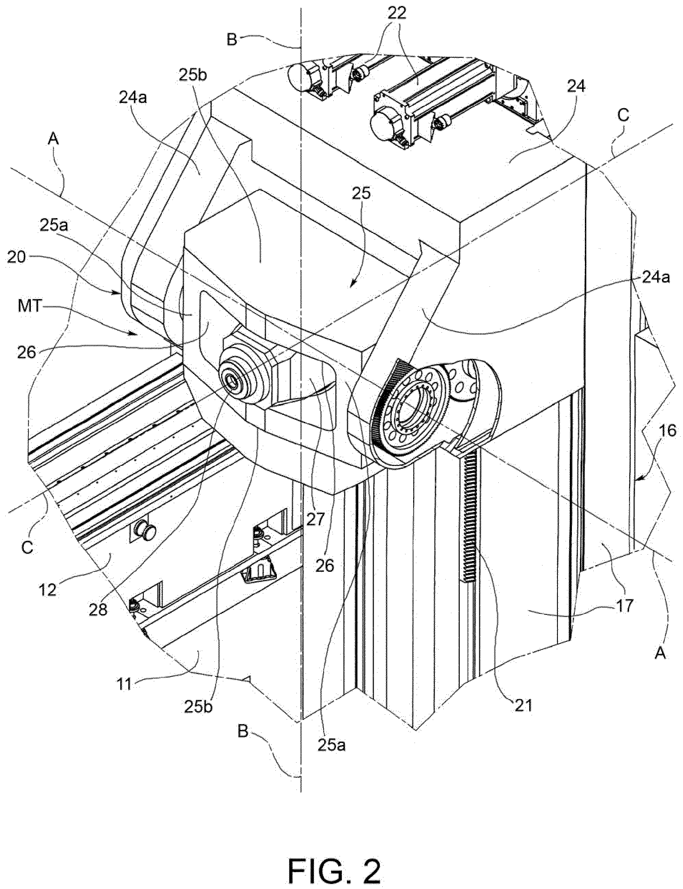

The tool-carrying carriage or head 20 is vertically translatable with respect to the upright 17 of the movable structure 16, along which only one of the guides is visible in figures 1 and 2, where it is indicated at 21. Accordingly, two electric motors 22 are mounted at the top of the carriage 20, each of which is capable of actuating in rotation a respective toothed pinion that engages with a corresponding rack guide 21.

In the embodiment illustrated by way of example, each carriage 18 associated with the upright 17 is provided with a respective pair of electric motors 23 (see, for example, figures 1, 3 and 4), each adapted to interact with a respective guide 12 to cause a horizontal displacement of the movable bearing structure 16 with respect to the fixed bearing structure 10.

With reference in particular to figure 2, in the illustrated embodiment, the tool-carrying carriage 20 comprises a support body 24 having in the front a configuration essentially in the shape of a fork, with two branches or prongs 24a facing each other.

The carriage 20 further comprises a second support body 25, essentially shaped as a substantially rectangular-shaped ring, with two portions or sides 25a substantially parallel to the branches or prongs 24a of the body 24, as well as two portions or sides 25b, orthogonal to said branches or prongs.

The support body 25 defines therewithin a through opening indicated at 26 (figures 2 and 5).

The support body 25 is rotatably mounted between the branches or the prongs 24a of the support body 24 around a first axis A-A intersecting such branches or prongs 24a (see figure 2).

Figures 2 and 5 show a further support body indicated at 27, mounted rotatably in the through opening 26 of the body 25 around a second axis B-B, which is orthogonal to the axis A-A.

Preferably, but not necessarily, the axes A-A and B-B intersect at one point.

In the support body 27, a tool-carrying spindle 28 (figures 2 and 5), of a type known per se, is mounted wherein a tool may be mouted, such as a milling tip.

The spindle 28 is rotatably mounted in the support body 27 around a third axis C-C, orthogonal to both the A-A and B-B axes.

Preferably, but not necessarily, the axis C-C and the axis B-B intersect each other at one point, preferably coinciding with the intersection point between the axes A-A and B-B.

The support bodies 25 and 26 and the spindle 28 are movable around the respective rotation axes A-A, B-B and C-C by means of motors of a type known per se, not shown in the drawings.

As already emphasized in the present description, the machine tool according to the present invention guarantees a very high flexural rigidity to the upright of the movable support structure in any operative position of the tool-carrying carriage.

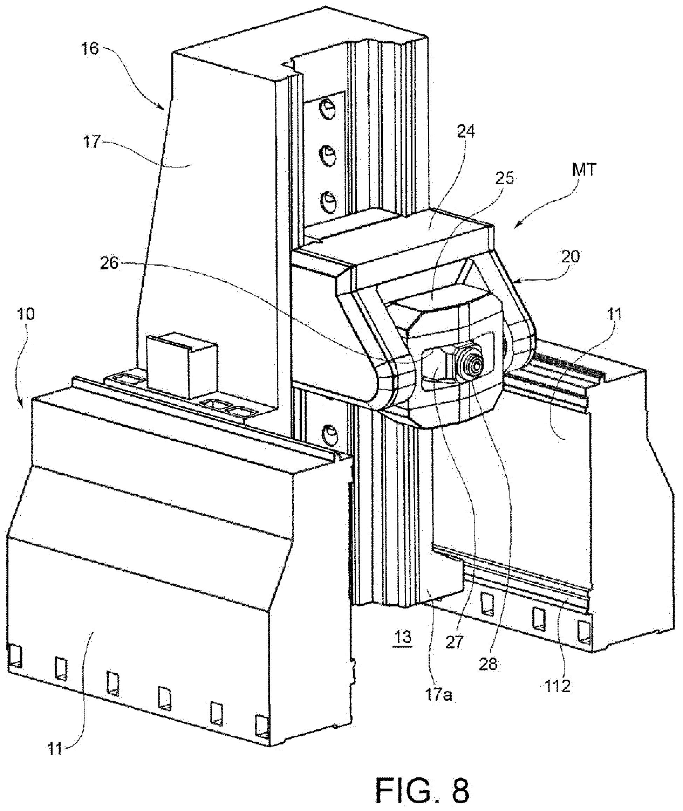

Figure 8 partially illustrates a variant of embodiment of the machine according to the invention. In such figure, the parts/elements already described have again been given the same reference symbols used previously in the figures.

In the variant according to figure 8, the movable bearing structure 16 is supported and guided not only on the elements 11 at the intermediate level hs defined above (figure 5), but also at its lower end, where lateral appendixes 17a of the upright 17 engage with corresponding horizontal guides 112 provided in the base bearing members 11 of the fixed bearing structure 10.

This solution allows the flexural operative rigidity of the upright 17 to be further increased.

Naturally, without altering the principle of the invention, the embodiments and the details of construction may vary widely with respect to those described and are illustrated purely by way of non-limiting example without thereby departing from the scope of the invention as defined in the appended claims.

**Claims**

1. A machine tool (MT) comprising
a fixed bearing structure (10),
a movable bearing structure (20) supported by the fixed bearing structure (10) and displaceable with respect thereto along a horizontal direction,
a tool-carrying carriage (20) mounted vertically translatable in the movable bearing structure (16) between an upper end position and a lower end position, situated at respective heights or levels ($h_M$, $h_m$) separated by a predetermined vertical distance ($h_M - h_m$), and
motor means (22, 23) adapted to cause a horizontal displacement of the movable bearing structure (16) with respect to the fixed bearing structure (10) and/or a vertical displacement of the tool-carrying carriage (20) with respect to the movable bearing structure (16);
the machine tool (MT) being **characterized in that** the fixed bearing structure (10) is configured such that the movable bearing structure (16) is supported and driven in its displacement at a height or level (hs) intermediate between the heights or levels ($h_M$, $h_m$) of said end positions of the tool-carrying carriage (20).

2. A machine tool according to claim 1, wherein said intermediate height or level (hs) substantially corresponds to the arithmetic average of the heights or levels ($h_M$, $h_m$) of said end positions of the tool-carrying carriage (20).

3. A machine tool according to claim 1 or claim 2, wherein
the fixed bearing structure (10) comprises two base bearing members (11) having associated horizontal guide means (12) along which the movable bearing structure (16) is displaceable, and
the movable bearing structure (16) has associated vertical guide means (21) along which the tool-carrying carriage (20) is displaceable.

4. A machine tool according to one of the preceding claims, wherein on each of said base bearing members (11) there is fixed a respective horizontal guide (12), and between said base bearing members (11) there is defined a passage (13) in which part of the movable bearing structure (16) extends, which on opposite sides has respective motorized carriages (18) adapted to interact with said guides (12) to cause a horizontal displacement of the movable bearing structure (16) with respect to the fixed bearing structure (10).

5. A machine tool according to any of the preceding claims, wherein the movable bearing structure (16) is provided with at least one vertical guide (21) and the tool-carrying carriage (20) is motorized and is adapted to interact with said at least one vertical guide (21) to perform a vertical displacement with respect to the movable bearing structure (16).

6. A machine tool according to any of the preceding claims, wherein the movable bearing structure (16) at its lower end is further supported in a horizontally displaceable manner by the fixed bearing structure (10).

7. A machine tool according to claims 3 and 6, wherein the lower end of the movable bearing structure (16) has appendixes (17a) engaged in corresponding horizontal guides (112) predisposed in said base bearing members (11).

FIG. 1

EP 3 308 903 A1

FIG. 2

FIG. 3

FIG. 4

FIG. 5

EP 3 308 903 A1

FIG. 6

FIG. 7

FIG. 8

Europäisches
Patentamt

European
Patent Office

Office européen
des brevets

# EUROPEAN SEARCH REPORT

Application Number

EP 17 19 4311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 152 081 A2 (TEIJIN SEIKI CO LTD [JP]) 21 August 1985 (1985-08-21) * figures 2-4 * | 1 | INV. B23Q1/01 B23Q1/62 B23Q5/38 |
| X | DE 10 2012 201736 B3 (DECKEL MAHO PFRONTEN GMBH [DE]) 27 June 2013 (2013-06-27) * figures 1-2 * | 1 | |
| X | WO 02/30615 A1 (DS TECHNOLOGIE WERKZEUGMASCHB [DE]; STUEDEMANN BERND [DE]; JODL WERNER) 18 April 2002 (2002-04-18) * figures 1-2 * | 1 | |
| X | EP 1 250 976 A1 (BACCI PAOLINO DI BACCI DI AGOS [IT]) 23 October 2002 (2002-10-23) * figure 3 * | 1 | |
| X | EP 1 402 991 A2 (KESSLER HANS KURT [DE]) 31 March 2004 (2004-03-31) * figures 1,4-5 * | 1 | TECHNICAL FIELDS SEARCHED (IPC) |
| X | DE 199 34 159 A1 (BURKHARDT & WEBER GMBH [DE]) 1 February 2001 (2001-02-01) * figures 2-4 * | 1-7 | B23Q |
| A | EP 1 270 143 A1 (KITAMURA MACHINERY CO LTD [JP]) 2 January 2003 (2003-01-02) * figures 1-3 * | 5 | |

The present search report has been drawn up for all claims

| Place of search | Date of completion of the search | Examiner |
|---|---|---|
| Munich | 27 February 2018 | Lasa Goñi, Andoni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 308 903 A1

## ANNEX TO THE EUROPEAN SEARCH REPORT
## ON EUROPEAN PATENT APPLICATION NO.

EP 17 19 4311

27-02-2018

| Patent document cited in search report | | Publication date | Patent family member(s) | | Publication date |
|---|---|---|---|---|---|
| EP 0152081 | A2 | 21-08-1985 | EP | 0152081 A2 | 21-08-1985 |
| | | | JP | S60167729 A | 31-08-1985 |
| | | | US | 4632615 A | 30-12-1986 |
| DE 102012201736 | B3 | 27-06-2013 | CN | 103213021 A | 24-07-2013 |
| | | | DE | 102012201736 B3 | 27-06-2013 |
| | | | EP | 2623255 A1 | 07-08-2013 |
| | | | ES | 2551431 T3 | 19-11-2015 |
| | | | JP | 5398925 B2 | 29-01-2014 |
| | | | JP | 2013158908 A | 19-08-2013 |
| | | | US | 2013207331 A1 | 15-08-2013 |
| WO 0230615 | A1 | 18-04-2002 | AT | 348684 T | 15-01-2007 |
| | | | CA | 2421616 A1 | 18-04-2002 |
| | | | DE | 10050141 A1 | 02-05-2002 |
| | | | EP | 1324856 A1 | 09-07-2003 |
| | | | US | 2004045146 A1 | 11-03-2004 |
| | | | WO | 0230615 A1 | 18-04-2002 |
| EP 1250976 | A1 | 23-10-2002 | EP | 1250976 A1 | 23-10-2002 |
| | | | IT | FI20010068 A1 | 21-10-2002 |
| EP 1402991 | A2 | 31-03-2004 | DE | 10245058 A1 | 08-04-2004 |
| | | | EP | 1402991 A2 | 31-03-2004 |
| DE 19934159 | A1 | 01-02-2001 | DE | 19934159 A1 | 01-02-2001 |
| | | | WO | 0107204 A1 | 01-02-2001 |
| EP 1270143 | A1 | 02-01-2003 | CA | 2357384 A1 | 22-12-2002 |
| | | | CN | 1393320 A | 29-01-2003 |
| | | | EP | 1270143 A1 | 02-01-2003 |
| | | | JP | 2003001542 A | 08-01-2003 |
| | | | KR | 20030001209 A | 06-01-2003 |
| | | | TW | 542766 B | 21-07-2003 |
| | | | US | 2002197124 A1 | 26-12-2002 |

EPO FORM P0459